# EUROPEAN PATENT APPLICATION

(11) **EP 4 787 798 A1**
(43) Date of publication of application: **05.08.2026**
(21) Application number: 24869771.6
(22) Date of filing: 24.05.2024
(51) Int. Cl.: H04L 41/12, H04L 41/0668

(54) **VIRTUAL REALITY MODEL-BASED METHOD AND COOPERATION SYSTEM FOR MULTI-TERMINAL COMMUNICATION, AND TERMINAL DEVICE**

(30) Priority: 25.09.2023 CN 202311246398
(71) Applicant: Kingfar International Inc., Beijing 100085 (CN)
(72) Inventor: ZHAO, Qichao, Beijing 100085 (CN); YANG, Ran, Beijing 100085 (CN)
(74) Representative: Meyer-Dulheuer MD Legal Patentanwälte PartG mbB
(86) International application number: PCT/CN2024/095100
(87) International publication number: WO 2025/066205

(57) **Abstract**

Provided is a method for multi-terminal communication based on a virtual reality model, and the method relates to the field of expanded reality technologies. According to the method, a terminal device searches for a first communication address in a local area network, broadcasts a second communication address through the local area network when the first communication address is not searched out, receives a plurality of requests from a plurality of terminal devices, and sends a plurality of virtual reality models to the plurality of terminal devices based on the plurality of requests. The plurality of terminal devices have one-to-one correspondence with the plurality of virtual reality models. The technical solution according to the present disclosure can avoid the problem of poor maintainability caused by all terminal devices in the local area being bound to a single server, thereby improving the usage experience.

## Description

### CROSS-REFERENCE TO RELATED APPLICATIONS

The present application claims priority to Chinese Patent Application No. 202311246398.2, entitled "VIRTUAL REALITY MODEL-based METHOD AND COOPeration SYSTEM FOR MULTI-TERMINAL COMMUNICATION, AND TERMINAL DEVICE", filed on September 25, 2023, the content of which is incorporated herein by reference in its entirety.

### TECHNICAL FIELD

The present disclosure relates to the field of extended reality technologies, and in particular, to a virtual reality model-based method and cooperation system for multi-terminal communication, and a terminal device.

### BACKGROUND

Extended reality (XR) refers to a technology that combines the real and the virtual through computers and wearable devices to create a human-computer interactive virtual environment. XR is a general term for technologies such as augmented reality (AR), virtual reality (VR), and mixed reality (MR). From the perspective of industry applications, AR driving, VR cycling, VR education and other applications are widely used in the current application market.

In the related art, when realizing multi-terminal collaborative parallel control, a server is used to manage virtual characters running on multiple terminals. However, when the server is used to manage virtual characters running on multiple terminals, if the server crashes, characters on any virtual terminal connected to the server will be unable to run.

### SUMMARY

The present disclosure provides a virtual reality model-based method and cooperation system for multi-terminal communication, and a terminal device.

In a first aspect, the present disclosure provides a method for multi-terminal communication based on a virtual reality model, applied to a terminal device, and including: searching for a first communication address in a local area network, where the first communication address is a communication address sent by other terminal devices in the local area network; broadcasting a second communication address through the local area network when the first communication address is not searched out, where the second communication address is a communication address of the terminal device; receiving a plurality of requests for obtaining virtual reality models from a plurality of terminal devices, where each of the plurality of requests is configured to indicate acquiring a virtual reality model; and sending a plurality of virtual reality models to the plurality of terminal devices based on the plurality of requests for obtaining virtual reality models, where the plurality of terminal devices have one-to-one correspondence with the plurality of virtual reality models.

By adopting the above technical solution, the terminal device broadcasts the second communication address through the local area network, so that other terminal devices in the local area network can establish communication with the terminal device based on the second communication address. In other words, the terminal device broadcasting the second communication address at this time functions as a server, so as to allocate virtual reality models to the other terminal devices in communication therewith, thereby enabling multiple terminal devices to be present in the same XR scenario. Since the terminal device serving as the server may be any terminal device within the local area network, when the terminal device serving as the server experiences a crash or a failure, any terminal device within the local area network that does not experience a failure can continue to serve as the server, realizing communication among other terminal devices in the local area network, realizing collaborative parallel control among a plurality of terminal devices, and avoiding the problem of poor maintainability caused by all terminal devices in the local area network being bound to a single server, thereby ensuring the usage experience.

In one or more embodiments, the terminal device broadcasts the second communication address in the local area network, so that the other terminal devices in the local area network establish communication with the terminal device through the second communication address after searching out the second communication address.

In one or more embodiments, after said sending the plurality of virtual reality models to the plurality of terminal devices based on the plurality of requests, the method further includes: receiving a first parameter from a first terminal device among the plurality of terminal devices, where the first parameter is configured to indicate a state change of a first virtual reality model running in the first terminal device, and the first virtual reality model is one of the plurality of virtual reality models; updating the plurality of virtual reality models based on the first parameter; and sending the updated plurality of first virtual reality models respectively to the corresponding terminal devices.

By adopting the above technical solution, the terminal device updates the first virtual reality model based on the first parameter, and simultaneously updates the other virtual reality models, thereby realizing synchronous updating of the virtual reality models corresponding to the plurality of terminal devices, and achieving the purpose of enabling a user to experience multi-terminal communication cooperation.

In one or more embodiments, after said searching for the first communication address in the local area network, the method further includes: sending a request for acquiring the virtual reality model to the first communication address when the first communication address is searched out; obtaining a first virtual reality model from the first communication address; sending a model parameter to the first communication address, where the model parameter is configured to indicate a state change of the first virtual reality model; and obtaining an updated first virtual reality model from the first communication address.

By adopting the above technical solution, after searching out the first communication address, the terminal device obtains the first virtual reality model through the first communication address, sends the model parameter through the first communication address, and receives the updated first virtual reality model, thereby realizing communication with other terminal devices, avoiding real-time communication with other terminal devices through a fixed server, and improving the practicability of the terminal device.

In one or more embodiments, when the first communication address is not acquired, the method further includes: receiving indication information from a user for obtaining the virtual reality model; generating a second virtual reality model other than the plurality of virtual reality models based on the indication information; detecting whether a parameter of the second virtual reality model changes; and updating the second virtual reality model when the parameter of the second virtual reality model changes.

By adopting the above technical solution, in addition to receiving a plurality of requests, the terminal device also responds to the indication information from its corresponding user for obtaining the virtual reality model, thereby improving the utilization rate of the terminal device.

In one or more embodiments, after said generating the second virtual reality model other than the plurality of virtual reality models, the method further includes: transmitting the second virtual reality model to a connected peripheral device through a peripheral device interface, to present the second virtual reality model in the peripheral device.

By adopting the above technical solution, the terminal device can support more types of peripheral devices through the peripheral device interface, enabling a user to experience more types of virtual reality models, thereby significantly improving the user experience.

In one or more embodiments, said receiving indication information from the user for obtaining the virtual reality model includes: based on a type of the peripheral device, displaying selectable virtual reality models to instruct the user to select the virtual reality model.

By adopting the above technical solution, the terminal device displays the selectable virtual reality models based on the peripheral device, and instructs the user to send a virtual reality model request, which can prevent the user from selecting a virtual reality model that cannot be displayed by the peripheral device corresponding to the terminal device, thereby avoiding the situation where the user cannot smoothly experience the XR project.

In one or more embodiments, the second communication address is sent through the local area network based on a broadcast communication protocol; and the plurality of requests are received based on a peer-to-peer communication transmission protocol.

By adopting the above technical solution, the terminal device broadcasts the second communication address based on the broadcast communication protocol, so that the plurality of terminal devices can respectively establish communication with the terminal device, thereby improving the speed of establishing communication with the plurality of terminal devices. Further, the plurality of requests sent by the plurality of terminal devices are received through the peer-to-peer communication transmission protocol, so as to ensure the stability of receiving the plurality of requests, thereby further improving both the speed of establishing communication with the plurality of terminal devices and the stability of information transmission.

A second aspect of the present disclosure provides a cooperation system for multi-terminal communication, including: a searching module configured to search for a first communication address in a local area network, where the first communication address is a communication address sent by other terminal devices in the local area network; a broadcasting module configured to broadcast a second communication address through the local area network when the first communication address is not searched out, where the second communication address is a communication address of the terminal device; a receiving module configured to receive a plurality of requests from a plurality of terminal devices, where each of the plurality of requests is configured to indicate acquiring a virtual reality model; and a sending module configured to send a plurality of virtual reality models to the plurality of terminal devices based on the plurality of requests, where the plurality of terminal devices have one-to-one correspondence with the plurality of virtual reality models.

A third aspect of the present disclosure provides a terminal device, including a processor, a memory, a user interface, and a network interface. The memory is configured to store an instruction, the user interface and the network interface are configured to communicate with other devices, and the processor is configured to execute the instruction stored in the memory, so that the terminal device implements the method according to any one of the first aspect.

A fourth aspect of the present disclosure provides a computer-readable storage medium on which an instruction is stored. The instruction, when is executed, is configured to implement the method according to any one of the first aspect.

In summary, one or more technical solutions according to the embodiments of the present disclosure have at least the following technical effects or advantages.

First, since the communication address can be sent through any one of the plurality of terminal devices to connect other terminal devices in the local area network, so as to realize collaborative parallel control among the plurality of terminal devices, and to avoid the problem of poor maintainability caused by all terminal devices in the local area network being bound to a single server, thereby ensuring the usage experience.

Second, since the terminal device includes the peripheral device interface that can identify various types of peripheral devices, facilitating the user to experience more virtual reality models.

Third, when clients corresponding to the plurality of terminal devices select to experience the same virtual reality model, the terminal device can independently update the virtual reality models corresponding to the plurality of terminal devices, so that the plurality of terminal devices can simultaneously experience the same virtual reality model, thereby further improving the user experience.

### BRIEF DESCRIPTION OF DRAWINGS

FIG. 1 is a schematic architectural diagram of a cooperation system for multi-terminal communication based on a virtual reality model according to an embodiment of the present disclosure.
FIG. 2 is a flowchart of a method for multi-terminal communication based on a virtual reality model according to an embodiment of the present disclosure.
FIG. 3 is a schematic structural diagram of a cooperation system for multi-terminal communication according to an embodiment of the present disclosure.
FIG. 4 is a schematic structural diagram of a terminal device according to an embodiment of the present disclosure.

### DESCRIPTION OF EMBODIMENTS

In order to enable those skilled in the art to better understand the technical solutions in the specification of the present disclosure, the technical solutions in embodiments of the present disclosure will be clearly and completely described below with reference to the drawings in the embodiments of the present disclosure. It is appreciated that, the described embodiments are only a part of the embodiments of the present disclosure, rather than all of the embodiments of the present disclosure.

In the description of the embodiments of the present disclosure, words such as "for example" or "exemplary" are used to represent examples, illustrations, or explanations. Any embodiment or design described as "for example" or "exemplary" in the embodiments of the present disclosure should not be construed as being more preferred or advantageous than other embodiments or design. Rather, use of words such as "for example" or "exemplary" is intended to present related concepts in a particular manner.

In the description of the embodiments of the present disclosure, term "a plurality of" means two or more. For example, a plurality of systems refer to two or more systems, and a plurality of screen terminals refer to two or more screen terminals. In addition, terms "first" and "second" are used for descriptive purposes only, and cannot be understood as indicating or implying relative importance or implicitly indicating an indicated technical feature. Therefore, the feature defined by "first" and "second" can indicate or imply to include one or more of the features. The terms "include", "comprise", "have" and variations thereof all mean "including but not limited to", unless otherwise specifically emphasized in other ways.

In the process of implementing the present disclosure, it has been found that, in XR technology applications, in order to enable multiple users to simultaneously interact in the same space, multiple computers may establish communication with a fixed server, and the selected virtual characters are locked and stored in the server. When a user needs to operate a virtual object, a virtual character operation request is sent to the server through a computer. After receiving the virtual character operation request, the server checks, in the locked virtual characters stored in the server, whether the virtual object requested to be operated has already been locked. If it is not locked, the server first adds a locking record of the object in an object locking table, and then sends an "operable" response to the computer. If the virtual character requested to be operated has already been locked, an "inoperable" response is sent to the computer, thereby preventing multiple computers participating in the collaboration from simultaneously operating the same virtual object and causing operation conflicts, and thus realizing collaborative parallel control among multiple computers.

The implementation of this solution relies heavily on the server. In practical applications, if the server fails, a user cannot operate virtual characters, which affects the user experience.

In order to ensure the usage experience, the present disclosure provides a cooperation system for multi-terminal communication based on a virtual reality model, which can solve the problems of low maintainability of XR projects and poor usage experience easily caused by the high degree of dependence on the server in the implementation of XR projects.

It should be understood that, in some embodiments of the present disclosure, the "peripheral device" refers to a device capable of displaying a virtual reality model to a user. For example, it may be, but is not limited to, a VR fitness device, a VR e-sports device, an AR racing device, or a handle control device. The peripheral device may be a wearable or non-wearable device, which is not limited in the embodiments of the present disclosure.

It should also be understood that the computer configured to be connected to the peripheral device may be any terminal device connected to the peripheral device, such as a mobile phone, a tablet computer, a notebook computer, a palmtop computer, a computing device, or other devices, which is not limited in the embodiments of the present disclosure.

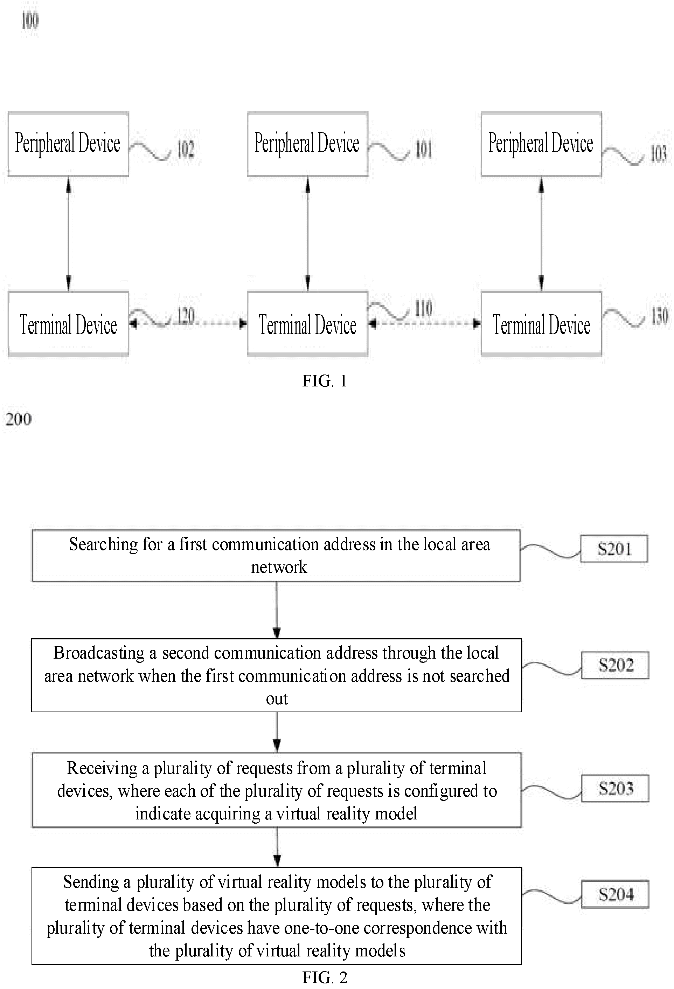

FIG. 1 shows a schematic architectural diagram of a cooperation system for multi-terminal communication based on a virtual reality model applicable to an embodiment of the present disclosure. FIG. 1 schematically shows three terminal devices and three peripheral devices, and the terminal devices have one-to-one correspondence with the peripheral devices. It may be understood that the cooperation system 100 shown in some embodiments of the present disclosure may include more or fewer terminal devices and peripheral devices, and the number of terminal devices and peripheral devices is not specifically limited in the embodiments of the present disclosure, which is set according to application scenarios. The following description will be given by taking the cooperation system 100 including three terminal devices and three peripheral devices as an example.

The terminal device 110 may be connected to the peripheral device 101 in a wired manner or a wireless manner, and the terminal device 110 may detect a device type of the peripheral device 101. In an example, the terminal device 110 communicates with the terminal device 120 and the terminal device 130 in a wireless manner.

Terminal device 110 is configured to display selectable virtual reality models to a user according to the type of the peripheral device 101, and to generate a corresponding virtual reality model according to the virtual reality model selected by the user, so as to send the virtual reality model to the peripheral device 101.

The peripheral device 101 is configured to display the virtual reality model generated by the terminal device 110 to the user.

The uses and connection manners of the terminal device 120 and the peripheral device 102 are as described above. In addition, the terminal device 120 is connected to the terminal device 110 in a wireless manner.

The uses and connection manners of the terminal device 130 and the peripheral device 103 are as described above. In addition, the terminal device 130 is connected to the terminal device 110 in a wireless manner.

In the cooperation system for multi-terminal communication based on the virtual reality model provided in the embodiments of the present disclosure, the terminal device 110 establishes a wired connection to the peripheral device 101, and the terminal device 110 searches for a communication address in a local area network. If neither the terminal device 120 nor the terminal device 130 broadcasts a communication address, the terminal device 110 cannot communicate with the terminal device 120 and the terminal device 130. At this time, the terminal device 110 broadcasts its own communication address in the local area network, so that the terminal device 120 and the terminal device 130 can establish wireless communication with the terminal device 110 based on the broadcast communication address, so that the terminal device 110 receives a plurality of requests sent by the terminal device 120 and the terminal device 130 in real time, and further respectively transmits virtual reality models to the terminal device 120 and the terminal device 130 based on the requests. In addition, the terminal device 110 may further display selectable virtual reality models to the user according to the type of the connected peripheral device 101, so as to instruct the user to select a virtual reality model.

In other scenarios, if any one of the terminal device 120 and the terminal device 130 has sent a communication address, the terminal device 110 establishes wireless communication with the terminal device 120 or the terminal device 130 corresponding to the communication address based on the searched communication address. The terminal device 110 displays selectable virtual reality models to the user by determining the type of the peripheral device 101 connected thereto, sends a request for obtaining the virtual reality model to the terminal device 120 or the terminal device 130 according to the virtual reality model selected by the user, and receives the generated virtual reality model.

Hereinafter, a method for multi-terminal communication based on a virtual reality model according to an embodiment of the present disclosure is described in detail with reference to FIG. 1. The execution subject of the method for multi-terminal communication based on the virtual reality model provided in the embodiments of the present disclosure may be the terminal device , the terminal device 102, or the terminal device 103 shown in FIG. 1.

Hereinafter, a method 200 for multi-terminal communication based on a virtual reality model according to an embodiment of the present disclosure is described in detail with reference to FIG. 2.

In step S201, a first communication address is searched in the local area network.

The first communication address may be understood as a communication address sent by any other terminal device except the terminal device itself in the local area network.

It should be understood that the first communication address may be an IP address, or may be another address that can establish communication, which will not be limited herein.

In step S202, when the first communication address is not searched out, a second communication address is broadcast through the local area network.

The second communication address may be understood as a communication address of the terminal device itself.

Exemplarily, when the terminal device does not search out the first communication address, the terminal device may broadcast the second communication address in the local area network, so that other terminal devices in the local area network may search out the second communication address sent by the terminal device, and then the other terminal devices establish communication with the terminal device through the second communication address.

In step S203, a plurality of requests are received from a plurality of terminal devices, where each of the plurality of requests is configured to indicate acquiring a virtual reality model.

The virtual reality model may be understood as a model including a virtual character and a virtual scene corresponding to the virtual character.

In some embodiments of the present disclosure, the user selects a virtual reality model on the terminal device according to the virtual character that the user needs to experience, and the terminal device generates the request in response to the virtual reality model selected by the user. The plurality of requests may be understood as follows: a plurality of users respectively select a virtual reality model on their corresponding terminal devices according to the virtual characters that the users need to experience, and the plurality of terminal devices respectively generate the plurality of requests in response to the selections of the users.

In some embodiments of the present disclosure, the plurality of requests may include any number of requests indicating acquiring the same virtual reality model. For example, there are ten requests, and three types of models: model A, model B, and model C, among which three requests indicate acquiring model A, six requests indicate acquiring model B, and one request indicates acquiring model C.

It is easy to understand that when the requests are the same, the corresponding virtual characters and the virtual scenes corresponding to the virtual characters are also the same. However, when generating the virtual reality model, the terminal device generates the virtual reality model according to the state of the user (e.g., standing posture) and the request sent by the user. If the virtual reality model requests sent by the users corresponding to the terminal devices are the same but the states are different, the virtual reality models generated by the terminal devices are different.

It should be understood that, in some embodiments of the present disclosure, there is one-to-one correspondence among the plurality of requests, the plurality of terminal devices, and the plurality of virtual reality models. For example, the above ten requests may be sent by ten terminals. If there are ten requests, the terminal device generates ten virtual reality models based on the ten requests, where any number of the ten requests may be the same, and the ten virtual reality models then respectively be sent to the ten terminal devices. In some embodiment, the users may select the same virtual reality model, thereby avoiding selection conflicts caused by a plurality of users selecting the same virtual reality model, and ensuring that the usage experience of the plurality of users are simultaneously satisfied.

In practical applications, a user may experience a virtual reality model through a peripheral device.

In an optional implementation of the embodiments of the present disclosure, the terminal device transmits the second virtual reality model to the connected peripheral device through the peripheral device interface, so as to present the second virtual reality model in the peripheral device.

It is easy to understand that the peripheral device interface is an interface used to identify the type of the peripheral device connected to the terminal device. For example, the peripheral device interface may be an OpenXR interface, an NWH interface, or a peripheral device interface including both the OpenXR interface and the NWH interface.

In the implementation, the terminal device includes the OpenXR interface and the NWH interface. According to the type of connected peripheral device, the terminal device transmits the second virtual reality model to the peripheral device through one of the OpenXR interface or the NWH interface, such that the peripheral device may display the second virtual reality model to the user.

In an example, the terminal device includes both the OpenXR interface and the NWH interface, and can support more types of peripheral devices, so that the user can experience more types of virtual reality models, thereby improving user experience to a large extent.

It is easy to understand that different types of peripheral devices may display different virtual reality models. For example, the selectable virtual models when the peripheral device is a VR fitness device are different from the selectable virtual models when the peripheral device is an AR racing device.

In an example, the terminal device receives indication information from the user indicating acquiring a virtual reality model, and may display selectable virtual reality models based on the type of the peripheral device to instruct the user to select a virtual reality model.

The terminal device may determine, according to the type of the peripheral device, that the peripheral device can display the virtual reality models, and then display options corresponding to the virtual reality models that can be displayed by the peripheral device to the user, so as to instruct the user to select the virtual reality model to be experienced from among multiple options.

In an example, the terminal device displays the selectable virtual reality models based on the peripheral device, and instructs the user to send a virtual reality model request, which can prevent the user from selecting a virtual reality model that cannot be displayed by the peripheral device corresponding to the terminal device, thereby avoiding the situation where the user cannot smoothly experience the XR project.

It should be understood that the terminal device may further include more types of interfaces to support more types of peripheral devices, which is not limited in the present disclosure.

In another example, the terminal device may display options corresponding to all virtual reality models. When the user selects a virtual reality model that cannot be displayed by the connected peripheral device, the terminal device displays "the model is not selectable", so as to instruct the user to complete the selection of the virtual reality model.

In some embodiments of the present disclosure, before generating the plurality of requests, the multiple terminal devices display selectable virtual reality models to users, so as to instruct the user to select the virtual reality model to be experienced. This method is the same as the method of the aforementioned terminal device instructing the user to select the virtual reality model to be experienced, and is not described in detail herein.

In step S204, a plurality of virtual reality models are sent to the plurality of terminal devices based on the plurality of requests, where the plurality of terminal devices have one-to-one correspondence with the plurality of virtual reality models.

For example, after receiving the plurality of requests from the plurality of terminal devices, the terminal device generates the plurality of virtual reality models according to the virtual reality model indicated by each of the plurality of requests, and then respectively sends the generated virtual reality models to the plurality of terminal devices according to a correspondence between the plurality of requests and the plurality of terminal devices, so that the plurality of terminal devices obtain the virtual reality models corresponding thereto respectively.

According to the method for multi-terminal communication based on the virtual reality model provided in the embodiments of the present disclosure, the terminal device searches for the first communication address in the local area network, and when the first communication address is not searched out, the terminal device sends its own corresponding second communication address through the local area network, so that the plurality of terminal devices can establish communication with the terminal device based on the second communication address, and the terminal device receives the plurality of requests from the plurality of terminal devices, and further sends the plurality of virtual reality models to the plurality of terminal devices based on the plurality of requests, realizing that the terminal device and the plurality of terminal devices are in the same XR scenario. Since the terminal device may be any terminal device in the local area network that does not search out the first communication address and establishes communication with the plurality of terminal devices by sending the second communication address, when the terminal device crashes or fails, any terminal device among the plurality of terminal devices may be used to be connected to other terminal devices in the local area network, thereby realizing collaborative parallel control among the plurality of terminal devices, avoiding the problem of poor maintainability caused by all terminal devices in the local area network being bound to a single server, and ensuring the usage experience.

In some embodiments, after sending the plurality of virtual reality models to the plurality of terminal devices based on the plurality of requests, the terminal device receives a first parameter from a first terminal device among the plurality of terminal devices, where the first parameter is configured to indicate a state change of a first virtual reality model running in the first terminal device, and the first virtual reality model is one of the plurality of virtual reality models. The terminal device updates the plurality of virtual reality models based on the first parameter; and sends the updated plurality of virtual reality models respectively to the corresponding terminal devices.

The first terminal device refers to any terminal device among the plurality of terminal devices where the state of the virtual reality model changes. It should be understood that states of virtual reality models corresponding to any number of terminal devices among the multiple terminal devices may change.

It is easy to understand that the plurality of terminal devices include the first terminal device and the other terminal devices except the first terminal device. The first virtual reality model belongs to the virtual scenes corresponding to the other virtual reality models of the other terminal devices. When the first virtual reality model is updated, the terminal device may simultaneously update the other virtual reality models, so as to realize synchronization of the virtual reality models of the plurality of terminal devices.

Taking the case where only the state of the first virtual reality model running in the first terminal device among the plurality of terminal devices changes as an example, the first virtual reality model sent by the terminal device to the first terminal device is a standing person, the virtual character in the first virtual reality model is in a static standing state, and the virtual scene corresponding to the character is the scene viewed in the stationary standing state. After the first terminal device receives the first virtual reality model, the user walks to the right. At this time, a first parameter is generated, indicating that the virtual character walks to the right. The terminal device updates the first virtual reality model based on the first parameter by changing the virtual character from a stationary state to a walking-to-the-right state, and the virtual scene corresponding to the character also changes to the scene viewed in the walking-to-the-right state. At the same time, the virtual scenes in the other virtual reality models changes, and the terminal device simultaneously updates the other virtual reality models. Finally, the terminal device sends the updated first virtual reality model to the first terminal device, and sends the other updated virtual reality models to the other terminal devices.

In some embodiments, the terminal device updates the first virtual reality model based on the first parameter, and simultaneously updates the other virtual reality models, thereby realizing synchronous updating of the virtual reality models corresponding to the plurality of terminal devices, and achieving the purpose of enabling a user to experience multi-terminal communication cooperation.

In other embodiments, before the terminal device updates the first virtual reality model and the other virtual reality models based on the first parameter, any number of the other terminal devices may send an instruction of "not synchronously updating with the first terminal device" to the terminal device. After receiving the instruction, the terminal device does not update the virtual reality model of the terminal device that sends the information based on the first parameter.

The above description takes the terminal device receiving the plurality of requests from the plurality of terminal devices as an example. The following describes that the terminal device, while receiving the multiple requests, also generates a request in response to the virtual reality model selected by its own corresponding user.

For example, the terminal device is further configured to receive indication information from the user for indicating acquiring the virtual reality model, generate a second virtual reality model other than the plurality of virtual reality models based on the indication information, detect whether a parameter of the second virtual reality model changes, and update the second virtual reality model when the parameter of the second virtual reality model changes.

The indication information is used to instruct the terminal device to generate, in response to the user selection, a virtual reality model that needs to be acquired.

It is easy to understand that the second virtual reality model is the virtual reality model selected by the user corresponding to the terminal device to be experienced.

In some embodiments, in addition to receiving the plurality of requests, the terminal device also responds to the indication information from its corresponding user for obtaining the virtual reality model, thereby improving the utilization rate of the terminal device.

As described above, when some users corresponding to certain terminal devices among the plurality of terminal devices select the same virtual reality model as the user corresponding to the terminal device, the terminal device independently updates the virtual reality model corresponding to the terminal device, and synchronously updates the virtual reality models corresponding to the other terminal devices.

Taking the terminal device 101, the terminal device 102, and the terminal device 103 shown in FIG. 1 as an example, a method for multi-terminal communication based on a virtual reality model provided in the embodiments of the present disclosure is described in more detail through a specific scenario.

In an example, the XR project provides a street scene including a virtual scene (a building), a character 1 (a pedestrian standing on the left side of the building), and a character 2 (a driver who is driving a car). The terminal device 101 establishes communication with the terminal device 102 and the terminal device 103 by broadcasting a second communication address. The user corresponding to the terminal device 101 selects a first virtual reality model, which includes a virtual character (character 1) and a virtual scene (the building, character 2). The user corresponding to the terminal device 102 selects a second virtual reality model, which includes a virtual character (character 2) and a virtual scene (the building, character 1). The user corresponding to the terminal device 103 selects a third virtual model, which includes a virtual character (character 1) and a virtual scene (the building, character 2). It can be seen that the virtual reality models acquired by the terminal device 101 and the terminal device 103 are the same.

The terminal device 101 generates a first virtual reality model, a second virtual reality model, and a third virtual reality model in response to selections of the users corresponding to the terminal device 101, the terminal device 102, and the terminal device 103, and respectively sends the second virtual reality model and the third virtual reality model to the terminal device 102 and the terminal device 103. The terminal device 101, the terminal device 102 and the terminal device 103 respectively display the selected virtual reality models to the users through peripheral devices. The users corresponding to the terminal device 101 and the terminal device 103 both see themselves standing on the left side of the building, with a driver driving on the road. The user corresponding to the terminal device 102 sees himself/herself driving a car, with a pedestrian standing on the left side of the building. Each user performs respective actions. In the first virtual reality model, the character 1 changes from standing on the left side of the building to walking toward the right side of the building, and the user state corresponding to the first virtual reality model changes, thereby generating a first parameter. In the second virtual reality model, the character 2 changes from driving to stopping the car and getting out of the car, and the user state corresponding to the second virtual reality model changes, thereby generating a second parameter. In the third virtual reality model, the character 1 changes from standing on the left side of the building to walking toward the left side away from the building, and the user state corresponding to the third virtual reality model changes, thereby generating a third parameter. At this time, the terminal device updates the first virtual reality model, the second virtual reality model, and the third virtual reality model by acquiring the first parameter, the second parameter, and the third parameter, and sends the updated first virtual reality model to the terminal device 102, and the updated third virtual reality model to the terminal device 103. The updated first virtual reality model displayed to the user by the terminal device 101 is as follows: the character 1 walks from the left side to the right side of the building, the virtual scene viewed from the character 1 is a scene of walking from the left side to the right side of the building, and the character 2 in the virtual scene changes from driving to stopping the car and getting out of the car. The updated second virtual reality model displayed to the user by terminal device 102 is as follows: the character 2 changes from driving to stopping and getting out of the car, the virtual scene viewed from the character 2 is a scene that goes from driving to stopping, followed by getting out of the car, and the character 1 in the virtual scene changes from standing on the left side of the building to walking toward the right side of the building. The updated third virtual reality model displayed to the user by terminal device 103 is as follows: the character 1 changes from standing on the left side of the building to walking toward the left side away from the building, the virtual scene viewed from the character 1 is a scene of walking toward the left side away from the building, and the character 2 in the virtual scene remains in the driving state.

In the implementation, after generating requests, the terminal device and the plurality of terminal devices may further display "complete selection" and "re-selection" to the users, so as to instruct the user to click "complete selection" when no selection change is needed, indicating that the user has been the ready state; or click "re-selection" when a change is needed, indicating that the virtual reality model needs to be re-selected. After obtaining the information of "complete selection" sent by the plurality of terminal devices and "complete selection" chosen by its own user, the terminal device starts to generate virtual reality models based on the generated requests, thereby avoiding a situation in which the user cannot timely reselect after selecting an incorrect virtual reality model, which affects the usage experience.

It is easy to understand that after receiving the request, the terminal device may also send the virtual reality model to the terminal device that sends the request after an interval of 10 seconds, so as to prevent the user from being unable to reselect the virtual reality model to be experienced.

The above are the steps performed by the terminal device when the terminal device does not search out the first communication address. The following are the steps performed by the terminal device when the terminal device searches out the first communication address.

In some embodiments, after acquiring the first communication address based on the local area network, the terminal device searches out the first communication address, and sends a request for acquiring the virtual reality model to the first communication address. The terminal device obtains a first virtual reality model from the first communication address, sends a model parameter to the first communication address, where the model parameter is configured to indicate a state change of the first virtual reality model, and obtain the updated first virtual reality model from the first communication address.

It should be understood that when the terminal device searches out the first communication address, the first virtual reality model refers to the virtual reality model generated according to the request corresponding to the terminal device. The model parameter refers to the model parameter generated due to the state change of the user corresponding to the terminal device. The updated first virtual reality model refers to the first virtual reality model generated by the terminal device corresponding to the first communication address according to the model parameter, as well as other model parameters sent by other terminals in the local area network.

Similar to the method for synchronizing the virtual reality model of the terminal device and the virtual reality models of the plurality of terminal devices, the terminal device sends, in response to the virtual reality model selected by the user, a request for acquiring a virtual reality model to the first communication address, acquires a first virtual reality model from the first communication address, and then sends the model parameter generated based on a state change of the user to the first communication address, so as to acquire the updated first virtual reality model generated based on the model parameter. When the first virtual reality model does not change, the terminal device receives, from the first communication address, the first virtual reality model updated based on the model parameter and other model parameters.

In some embodiments, after searching out the first communication address, the terminal device obtains the first virtual reality model through the first communication address, sends the model parameters through the first communication address, and receives the updated first virtual reality model, thereby realizing communication with other terminal devices, avoiding real-time communication with other terminal device through a fixed server, thereby improving the practicability of the terminal device.

In other embodiments, after acquiring the first communication address based on the local area network, when the terminal device does not search out the first communication address, the terminal device instructs a worker or a user to input the communication address of other terminal devices in the local area network, so as to implement interaction with the other terminal devices through the communication address.

In an example, the terminal device sends the second communication address in the local area network based on the broadcast communication protocol, and receives the plurality of requests based on the peer-to-peer communication transmission protocol.

For example, the second communication address is sent through the local area network based on a UDP protocol, and the plurality of requests are received based on a KCP protocol.

It should be understood that the terminal device may receive the plurality of requests based on the KCP protocol, or may send a virtual reality model or other information based on the KCP protocol.

In some embodiments of the present disclosure, the terminal device broadcasts the second communication address in the local area network based on the UDP protocol, so that a plurality of terminal devices in the local area network can respectively receive the second communication address sent by the terminal device, thereby establishing communication with the plurality of terminal devices. Further, the terminal device receives a plurality of requests sent by the plurality of terminal devices based on the KCP protocol.

In some embodiments, the terminal device broadcasts the second communication address based on the broadcast communication protocol, so that the plurality of terminal devices can respectively establish communication with the terminal device, thereby improving the speed of establishing communication with the plurality of terminal devices. Further, the plurality of requests sent by the plurality of terminal devices are received through the peer-to-peer communication transmission protocol, so as to ensure the stability of receiving the plurality of requests, thereby further improving both the speed of establishing communication with the plurality of terminal devices and the stability of information transmission.

It should be understood that when the terminal device establishes communication with the plurality of terminal devices, the terminal device may also establish communication based on the TCP protocol, which is not limited in the present disclosure.

It may be understood that, to implement the functions described in FIG. 2, the terminal device includes corresponding hardware and/or software modules for performing the functions. With reference to the steps of each example described in the embodiments disclosed in the present disclosure, the present disclosure can be implemented in a form of hardware or a combination of hardware and computer software. Whether a function is executed by hardware or by computer software driving hardware depends on the specific application and design constraints of the technical solution. Those skilled in the art may use different methods to implement the described functions for each specific application in conjunction with the embodiments, but such implementation should not be considered beyond a scope of the present disclosure.

In some embodiments, functional modules of the terminal device may be divided according to the above method example. For example, different functional modules may be divided corresponding to each function, or two or more functions may be integrated into one processing module. The above-mentioned integrated module can be implemented in a form of hardware. It should be noted that the division of modules in the embodiments of present disclosure is exemplary, and is merely a logical function division. There may be other division manners in actual implementation.

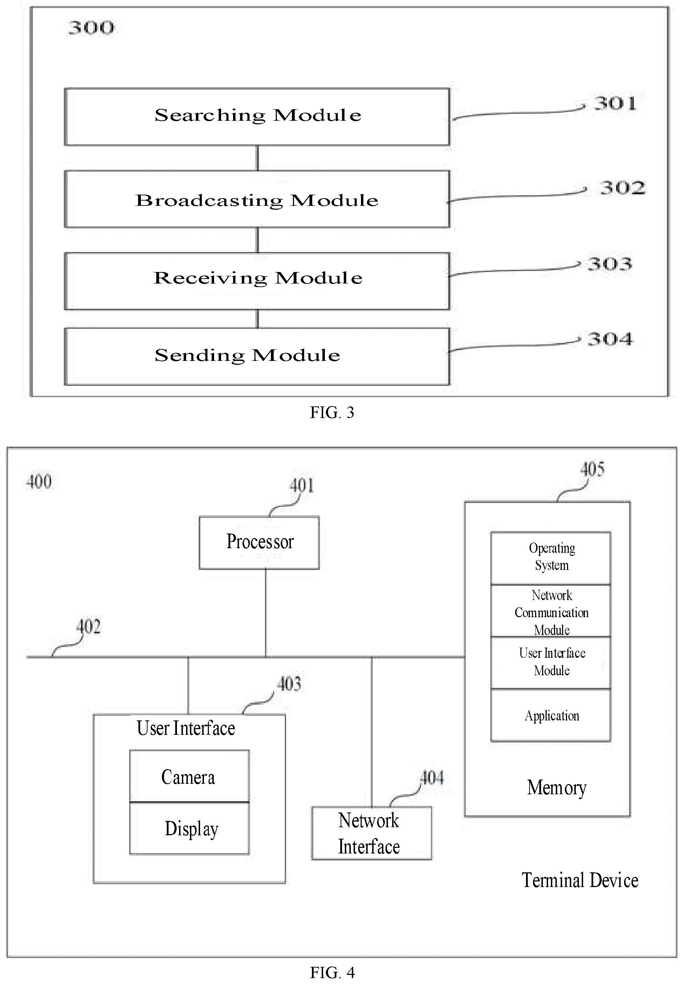

When each function module is divided corresponding to each function, FIG. 3 shows a possible schematic diagram of an apparatus 300 for multi-terminal communication in the above embodiments, and the apparatus 300 for multi-terminal communication includes: a searching module 301 configured to search for a first communication address in the local area network; a broadcasting module 302 configured to broadcast a second communication address through the local area network when the first communication address is not searched out; a receiving module 303 configured to receive a plurality of requests from a plurality of terminal devices, where each of the plurality of requests is configured to indicate acquiring a virtual reality model; and a sending module 304 configured to send a plurality of virtual reality models to the plurality of terminal devices based on the plurality of requests, where the plurality of terminal devices have one-to-one correspondence with the plurality of virtual reality models.

In an optional implementation of the embodiments of the present disclosure, after sending the plurality of virtual reality models to the plurality of terminal devices based on the plurality of requests, the sending module 304 is further configured to: receive a first parameter from a first terminal device among the plurality of terminal devices, where the first parameter is configured to indicate a state change of a first virtual reality model running in the first terminal device, and the first virtual reality model is one of the plurality of virtual reality models; update the plurality of virtual reality models based on the first parameter; and send the updated plurality of virtual reality models respectively to the corresponding terminal devices.

In an optional implementation of the embodiments of the present disclosure, after searching for the first communication address in the local area network, the searching module 301 is further configured to: send a request for acquiring a virtual reality model to the first communication address when the first communication address is searched out; obtain a first virtual reality model from the first communication address; send a model parameter to the first communication address, where the model parameter is configured to indicate a state change of the first virtual reality model; and obtain the updated first virtual reality model from the first communication address.

In an optional implementation of the embodiments of the present disclosure, when the first communication address is not acquired, the receiving module 303 is further configured to: receive indication information from a user for obtaining a virtual reality model; generate a second virtual reality model other than the plurality of virtual reality models based on the indication information; detect whether a parameter of the second virtual reality model changes; and update the second virtual reality model when the parameter of the second virtual reality model changes.

In an optional implementation of the embodiments of the present disclosure, after generating the second virtual reality model other than the plurality of virtual reality models, the sending module 304 is further configured to: transmit the second virtual reality model to a connected peripheral device through a peripheral device interface, to present the second virtual reality model in the peripheral device.

In an optional implementation of the embodiments of the present disclosure, for receiving indication information from the user for indicating acquiring a virtual reality model, the receiving module 303 is specifically configured to: display selectable virtual reality models based on a type of the peripheral device to instruct the user to select the virtual reality model.

In an optional implementation of the embodiments of the present disclosure, the second communication address is sent through the local area network based on a broadcast communication protocol, and the plurality of requests are received based on the peer-to-peer communication transmission protocol.

The present disclosure further discloses a terminal device. Referring to FIG. 4, which is a schematic structural diagram of a terminal device according to an embodiment of the present disclosure, the terminal device 400 may include: at least one processor 401, at least one network interface 404, a user interface 403, a memory 405, and at least one communication bus 402.

The communications bus 402 is configured to implement connection and communication among these components.

The user interface 403 may include a display and a camera, and optionally may further include a standard wired interface and a standard wireless interface.

The network interface 404 may optionally include a standard wired interface and a standard wireless interface (such a WI-FI interface).

The processor 401 may include one or more processing cores. The processor 401 is connected to various parts in the entire server through various interfaces and lines, and executes various functions of the server and processes data by running or executing instructions, programs, code sets, or instruction sets stored in the memory 405 and by calling data stored in the memory 405. In an example, the processor 401 may be implemented in at least one hardware form such as a digital signal processing (DSP), a field-programmable gate array (FPGA), or a programmable logic array (PLA). The processor 401 may integrate one or more of a central processing unit (CPU), a graphics processing unit (GPU), and a modem. The CPU mainly processes an operating system, a user interface, and an application program, etc. The GPU is responsible for rendering and drawing the content that needs to be displayed on the display. The modem is configured to process wireless communication. It may be understood that the modem may not be integrated into the processor 401, and implemented separately through a single chip.

The memory 405 may include a random access memory (RAM) or a read-only memory. In an example, the memory 405 includes a non-transitory computer-readable storage medium. The memory 405 may be configured to store instructions, programs, codes, code sets, or instruction sets. The memory 405 may include a program storage area and a data storage area. The program storage area may store instructions for implementing an operating system, instructions for implementing at least one function (such as a touch function, a sound playback function, and an image playback function, etc.), and instructions for implementing the above method embodiments. The data storage area may store data in the above method embodiments. In an example, the memory 405 may also be at least one storage apparatus located away from the processor 401. Referring to FIG. 4, the memory 405, as a computer storage medium, may include an operating system, a network communication module, a user interface module, and an application program that generates a distribution transformer topology.

In the terminal device 400 shown in FIG. 4, the user interface 403 is mainly configured to provide an input interface for the user, to acquire data input by the user. The processor 401 may be configured to call an application program for generating a distribution transformer topology stored in the memory 405. When executed by one or more processors 401, the terminal device 400 perform the method described in one or more of the above embodiments. It should be noted that, to simplify the description, the foregoing method embodiments are all described as a series of action combinations. Whereas one of an ordinary skill in the art should know that the present disclosure is not limited by the described action sequence, because according to the present disclosure, some steps may be performed in other sequences or simultaneously. In addition, one of an ordinary skill in the art should also know that all embodiments described in the specification are just preferred embodiments, and the involved actions and modules are not indispensable in the present disclosure.

In the above embodiments, the description of each embodiment has a focus, and a certain part that is not described in detail in a certain embodiment, may be referred to in related descriptions in other embodiments.

In the embodiments provided in the present disclosure, it should be understood that the disclosed apparatus may be implemented in another manner. For example, the above apparatus embodiments described above are merely illustrative. For example, the division of units is merely a kind of logical function division, and there may be other division manners in actual implementation. For example, a plurality of units or components may be combined or integrated into another system, or some features may be ignored, or may not be performed. Alternatively, the coupling or direct coupling or communication connection shown or discussed may be an indirect coupling or communication connection through some service interfaces, devices or units, and may be electrical or other forms.

The units described as separate components may be or may not be physically separated from each other. The components displayed as units may be or may not be physical units, that is, may be located in one place, or may be distributed to a plurality of network units. Some or all of the units may be selected in accordance with actual needs to achieve the purpose of the solutions of the embodiments of the present disclosure.

In addition, each functional unit in the embodiments of the present disclosure may be integrated into one processing unit, or each unit may physically individual, or two or more units may be integrated into one unit. The above integrated unit may be implemented in a form of hardware, or may be implemented in a form of a software functional unit.

If the integrated unit is implemented in a form of a software function unit and is sold or used as an independent product, the integrated unit may be stored in a computer-readable memory. Based on such comprehension, the technical solutions of the present disclosure essentially, or a part contributing to the related art, or all or part may be embodied in a form of a software product. The computer software product is stored in a memory and includes instructions for causing a computer device (which may be a personal computer, a server, or a network device, etc.) to perform all or part of the steps of the methods in embodiments of the present disclosure. The aforementioned memory includes various media that can store program codes, such as a USB flash drive, a mobile hard disk, a magnetic disk, or an optical disk.

The above is merely an exemplary embodiment of the present disclosure, and cannot limit the scope of the present disclosure. That is, all equivalent changes and modifications made according to the teachings of the present disclosure still fall within the scope of the present disclosure. Other embodiments of the present disclosure will be readily apparent to those skilled in the art upon consideration of the disclosure of the specification and practice.

The present disclosure is intended to cover any variations, uses, or adaptive changes of the present disclosure that follow the general principles of the present disclosure and include common knowledge or conventional technical means in the art not recited by the present disclosure. The specification and embodiments are only to be regarded as exemplary, and the scope and spirit of the present disclosure are defined by the claims.

## Claims

1. A method for multi-terminal communication based on a virtual reality model, applied to a terminal device, comprising:
searching for a first communication address in a local area network, wherein the first communication address is a communication address sent by other terminal devices in the local area network;
broadcasting a second communication address through the local area network when the first communication address is not searched out, wherein the second communication address is a communication address of the terminal device;
receiving a plurality of requests from a plurality of terminal devices, wherein each of the plurality of requests is configured to indicate acquiring a virtual reality model; and
sending a plurality of virtual reality models to the plurality of terminal devices based on the plurality of requests, wherein the plurality of terminal devices have one-to-one correspondence with the plurality of virtual reality models.

2. The method according to claim 1, wherein the second communication address is broadcast in the local area network by the terminal device, so that the other terminal devices in the local area network establish communication with the terminal device through the second communication address after searching out the second communication address.

3. The method according to claim 1, wherein after said sending a plurality of virtual reality models to the plurality of terminal devices based on the plurality of requests, the method further comprises:
receiving a first parameter from a first terminal device among the plurality of terminal devices, wherein the first parameter is configured to indicate a state change of a first virtual reality model running in the first terminal device, and the first virtual reality model is one of the plurality of virtual reality models;
updating the plurality of virtual reality models based on the first parameter; and
sending the updated plurality of virtual reality models respectively to the corresponding terminal devices.

4. The method according to claim 1, wherein after said searching for a first communication address in a local area network, the method further comprises:
sending a request for acquiring the virtual reality model to the first communication address when the first communication address is searched out;
obtaining a first virtual reality model from the first communication address;
sending a model parameter to the first communication address, wherein the model parameter is configured to indicate a state change of the first virtual reality model; and
obtaining an updated first virtual reality model from the first communication address.

5. The method according to claim 1 or 3, wherein when the first communication address is not acquired, the method further comprises:
receiving indication information from a user for obtaining the virtual reality model;
generating a second virtual reality model other than the plurality of virtual reality models based on the indication information;
detecting whether a parameter of the second virtual reality model changes; and
updating the second virtual reality model when the parameter of the second virtual reality model changes.

6. The method according to claim 5, wherein after said generating a second virtual reality model other than the plurality of virtual reality models, the method further comprises:
transmitting the second virtual reality model to a connected peripheral device through a peripheral device interface, to present the second virtual reality model in the peripheral device.

7. The method according to claim 6, wherein said receiving indication information from a user for obtaining the virtual reality model comprises:
receiving the indication information from the peripheral device, wherein the indication information is generated based on the user's selection of the plurality of virtual reality models presented in the peripheral device.

8. The method according to claim 1, wherein the second communication address is sent through the local area network based on a broadcast communication protocol; and
the plurality of requests are received based on a peer-to-peer communication transmission protocol.

9. A cooperation system for multi-terminal communication, comprising:
a searching module configured to search for a first communication address in a local area network, wherein the first communication address is a communication address sent by other terminal devices in the local area network;
a broadcasting module configured to broadcast a second communication address through the local area network when the first communication address is not searched out, wherein the second communication address is a communication address of the terminal device;
a receiving module configured to receive a plurality of requests from a plurality of terminal devices, wherein each of the plurality of requests is configured to indicate acquiring a virtual reality model; and
a sending module configured to send a plurality of virtual reality models to the plurality of terminal devices based on the plurality of requests, wherein the plurality of terminal devices have a one-to-one correspondence with the plurality of virtual reality models.

10. A terminal device, comprising a processor, a memory, a user interface, and a network interface, wherein the memory is configured to store an instruction, the user interface and the network interface are configured to communicate with other devices, and the processor is configured to execute the instruction stored in the memory, so that the terminal device implements the method according to any one of claims 1 to 8.

11. A computer-readable storage medium on which an instruction is stored, wherein the instruction, when is executed, is configured to implement the method according to any one of claims 1 to 8.
